# NEUE EUROPÄISCHE PATENTSCHRIFT

(11) **EP 0 476 376 B2**
(45) Veröffentlichungstag und Bekanntmachung des Hinweises auf die Entscheidung über den Einspruch: **26.03.1997**
(45) Hinweis auf die Patenterteilung: 03.11.1993
(21) Anmeldenummer: 91114404.6
(22) Anmeldetag: 28.08.1991
(51) Int. Cl.: A23G 1/14, A23G 1/18, B01F 7/08

(54) **Verfahren und Vorrichtung zum Betrieb einer Conche**
Process and device for operating a conche
Procédé et dispositif pour faire fonctionner une conche

(30) Priorität: 13.09.1990 DE 4029037
(43) Veröffentlichungstag der Anmeldung: 25.03.1992
(73) Patentinhaber: BÜHLER AG, 9240 Uzwil (CH)
(72) Erfinder: Leuthold, Johannes, CH-9524 Zuzwil (CH); Kuster, Werner, CH-9244 Niederuzwil (CH)
(74) Vertreter: Révy von Belvárd, Peter

(56) Entgegenhaltungen:
- DD-A- 221 912
- DE-A- 3 626 732
- DE-A- 3 934 047
- Vortrag von A. Bertini "Der Schokoladenconchierprozess";
- Vortrag von A. Schmitt "Das Petzholt-Intensiv Veredelungsverfahren";
- Vortrag von R. Schmidt "Conchieren mit dem Frisse-Verfahren";
- K. Muentener "Der Conchierprozess ist von grossem Interesse", ZSW 11/1989, Seiten 368 und 369.

## Beschreibung

Die Erfindung betrifft ein Verfahren zum Betrieb einer Conche zum Verreiben und Verspachteln von Schokoladenmassen mit einem Trog nach dem Oberbegriff des Anspruches 1 sowie eine Vorrichtung zur Durchführung des Verfahrens nach dem Oberbegriff des Anspruches 7. Ein derartiges Verfahren sowie eine derartige Vorrichtung sind aus der DE-A-3934047 bekannt.

Conchen können als Trockenconchen oder Flüssigconchen ausgeführt sein. Vorteilhaft sind Conchen, die sowohl als Trockenconchen als auch als Flüssigconchen betrieben werden können. Bei einer derartigen aus der DE-A-36 26 732 bekannten Conche sind Versalbungswerkzeuge mit schräg zur Trogwand verlaufenden Versalbungsflächen vorgesehen, die für die Trockenbearbeitung unter Umkehrung der Drehrichtung als Schaber wirken. Die Conchen können nur einen Rotor in einem ihm zugeordneten Trogabteil oder auch mehrere Rotoren in jeweils zugeordneten Trogabteilen aufweisen.

Geht man von einer Conche aus, die durch Änderung der Drehrichtung der Rotoren sowohl als Trockenconche wie auch als Flüssigconche betreibbar ist, so durchläuft die Schokoladenmasse zunächst eine pastös-trockene Phase, geht anschliessend in eine zäh-plastische Phase über, um dann in eine flüssige Phase zu wechseln. Bei einem derartigen Conchieren der Schokolademasse durch die mechanische Einwirkung der Rotoren wird eine Erwärmung und Belüftung erzielt. Hierbei tritt beispielsweise eine Verdampfung von organischen Säuren wie Essigsäure und auch eine erwünschte Oxydation von Geschmacksstoffen ein. Ferner wird auch ein Mischeffekt und eine Abrundung der Partikelchen erzielt. Ein derartiger Conchierprozess ist jedoch sehr zeitaufwendig. So müssen feine Schokolademassen bis zu 48 Stunden lang conchiert werden. Erschwerend kommt dabei hinzu, dass Schokolademassen gleicher Rezeptur, gleichen Ausmahlungsgrades und gleicher Temperatur oftmals ganz unterschiedliche Viskosität besitzen, was erheblichen Einfluss auf den Conchierprozess hat.

In der DE-A-39 34 047 wurde bereits vorgeschlagen, die Drehzahl des Antriebsmotors der Conche in Abhängigkeit von einem vorgebbaren Motorstrom einzustellen. Damit soll die während eines Conchierprozesses aufgewendete Energie den verschiedenen Aggregatzuständen der Schokolademasse angepasst werden. Auf diese Weise lässt sich gegebenenfalls auch eine Verkürzung der Conchierzeit erreichen.

Der Erfindung liegt die Aufgabe zugrunde, ein Verfahren zum Betrieb einer Conche anzugeben, bei dem die Zeitdauer eines Conchierprozesses der im Trog befindlichen Schokolademasse genau angepasst ist, sowie eine Vorrichtung zur Durchführung des Verfahrens anzugeben.

Die Aufgabe wird erfindungsgemäss durch das Verfahren nach Anspruch 1 gelöst. Eine Vorrichtung zur Durchführung des Verfahrens ist in Anspruch 7 angegeben.

Es hat sich gezeigt, dass unterschiedliche Schokoladeneigenschaften und - Qualitäten praktisch ausschliesslich durch einen unterschiedlichen Energieeintrag während der zäh-plastischen Phase der Schokoladenmasse bestimmt sind. Durch die Ableitung des Abschlusses dieser Phase des Conchierprozesses aus dem Energiesummenwert der während der zäh-plastischen Phase der Conche zugeführten Energie lässt sich leicht wiederholbar Schokolademasse gleicher Eigenschaft und Qualität conchieren. Bei der Steuerung nach dem Energiesummenwert ist sichergestellt, dass nur so viel Energie in die Schokolademasse eingebracht wird, wie für die Bearbeitung der Schokolademasse zweckmässig und notwendig ist. Bisher für notwendig gehaltene Conchierzeiten können daher deutlich verkürzt werden. Hervorzuheben ist, dass durch die erfindungsgemässe Beendigung des Conchierprozesses wenigstens nach der zäh-plastischen Phase nach dem erreichten Energiesummenwert die zu Beginn unterschiedlichen Viskositäten von Schokoladenmassen gleicher Rezeptur ohne Einfluss auf die erzielten Schokoladeneigenschaften und -Qualitäten bleiben.

Vorteilhaft wird der Conchierprozess nach Auftreten des Schlusssignals erst nach einer vorgebbaren Zeitdauer beendet. Die Flüssigphase der Schokolademasse wird somit ausschliesslich durch die Zeitdauer bestimmt, wobei berücksichtigt wurde, dass ein zusätzlicher Energieeintrag während der Flüssigphase der Schokolademasse praktisch keinerlei Auswirkungen mehr zeigt.

In Weiterbildung der Erfindung kann zur Bildung des Energiesummenwertes auch die während der trocken-pastösen Phase, vorzugsweise zusätzlich die während der Flüssigphase der Conche zugeführte Energie aufsummiert werden. Auf diese Weise ist es möglich, sowohl die Trockenphase als auch die Flüssigphase nach dem dieser Phase vorgegebenen Energiesummenwert zu steuern.

Um die in die Conche eingebrachte Energie genau zu bestimmen, kann es vorteilhaft sein, dass die der Conche über ein Wärmeträgermedium zugeführte Wärmeenergie zur Bildung des Energiesummenwertes herangezogen wird. Obwohl dieser Energieanteil im Verhältnis zur eingebrachten mechanischen Energie sehr gering sein wird, wird hierdurch jedoch eine noch grössere Genauigkeit bei der Bildung des Energiesummenwertes und der anschliessenden Steuerung erzielt.

In besonderer Weiterbildung der Erfindung wird die Zugabe einzelner Mischungskomponenten zur Schokolademasse in Abhängigkeit der Grösse des ermittelten Energiesummenwertes gesteuert. Bevorzugt kann die Steuerung nach der Grösse der momentan erfassten Energiewerte vorgenommen werden. Da die momentane Energieaufnahme (Aufnahme von mechanischer Energie) ein Mass für den Aggregatzustand der Schokolademasse ist, kann die Zugabe der einzelnen Mischungskomponenten genau in dem Zeitpunkt erfolgen, in dem die in der Conche behandelte Schokolademasse die optimale Konsistenz für das Einarbeiten der hinzutretenden Mischungskomponenten besitzt.

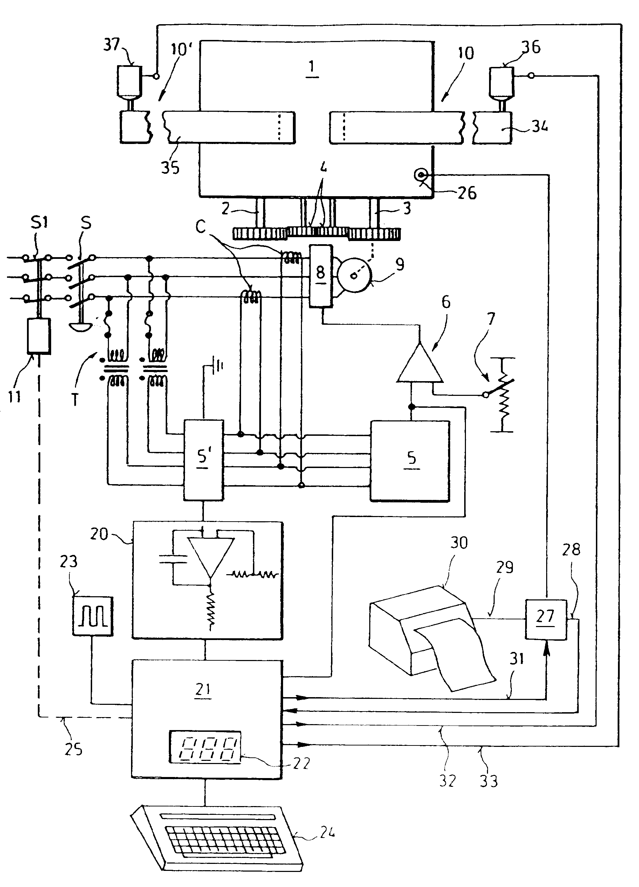

Weitere Merkmale der Erfindung ergeben sich aus den weiteren Ansprüchen, der Beschreibung und der Zeichnung, in der schematisch ein Ausführungsbeispiel einer erfindungsgemässen Vorrichtung zur Durchführung des Verfahrens dargestellt ist.

In einer Conche sind mittels zweier Rotorwellen 2 und 3 im Inneren des Troges der Conche 1 in zugehörigen Trogabteilen umlaufende Rotoren angetrieben. Der Antrieb der Rotorwellen 2 und 3 erfolgt über einen gemeinsamen Antriebsmotor 9, der im Ausführungsbeispiel die Welle 3 und über Zwischenräder 4 die Welle 2 antreibt. Ein getrennter Antriebsmotor für jede Welle könnte auch zweckmässig sein. Ebenso spielt es für die Erfindung keine Rolle, wieviele Rotoren innerhalb des Conchentroges 1 angeordnet sind; es sind sowohl Conchen mit nur einem Rotor, wie auch Conchen mit drei und mehr Rotoren bekannt.

Der Antriebsmotor 9 ist ein Mehrphasenmotor (Drei-Phasen-Motor), der über einen Hauptschalter S an das Netz anschaltbar ist. In Reihe mit dem Hauptschalter S liegt ein Schalter S1, der im Ruhestand geschlossen ist. Über Wicklungen c wird der in den Zuleitungen fliessende Motorstrom erfasst. Ferner kann ein Spannungsabgriff T über Trenntransformatoren angeordnet sein. Zur Erfassung eines Motorbetriebsparameters ist ein Stromabgriff über die Wicklungen c oder ein Spannungsabgriff T ausreichend. Vorteilhaft wird der Stromabgriff über die Wicklungen c benutzt, um so einen zur Bestimmung deraufgenommenen Energie massgeblichen Motorbetriebsparameter zu erhalten.

Die Wicklungen c des Stromabgriffs sind mit einem Signalwandler 5 verbunden, dessen Ausgang auf den ersten Eingang eines Vergleichers 6 geschaltet ist. An den zweiten Vergleichereingang ist ein einstellbarer Sollwertgeber 7 angeschlossen. Das Ausgangssignal des Vergleichers 6 ist einer Motorsteuerschaltung 8 zugeführt, die die Stromaufnahme des Antriebsmotors 9 in Abhängigkeit der Differenz zwischen dem Istwert des Motorstroms (Signalwandler 5) und dem Sollwert des Motorstroms (Sollwertgeber 7) steuert.

Dieser Stromregelkreis ist für die Durchführung des erfindungsgemässen Verfahrens nicht zwingend erforderlich, sondern bildet eine zweckmässige Ausgestaltung.

Die Signale des Spannungsabgriffs T und die Signale des Stromabgriffs der Wicklungen c sind einem weiteren Signalwandler 5' zugeführt, der in den Signalwandler 5 integriert sein kann. Der Ausgang eines derartigen kombinierten Signalwandlers wird dann einerseits dem Vergleicher 6 und andererseits der Integrierstufe 20 zugeführt.

Die mit dem Signalwandler 5' verbundene Integrierstufe 20 umfasst - wie schematisch angedeutet - einen vorzugsweise integrierenden Verstärker, der mit einem Vorverstärker und/oder Endverstärker kombiniert sein kann. Die Integrierstufe 20 integriert die aufgenommene Energie (P-UxI) über der Zeit. Aufgrund der begrenzten Dimensionierbarkeit des zur Integration vorgesehenen Kondensators wird der erreichte Energiesummenwert der Integrierstufe während eines Conchierprozesses mehrfach abgefragt, vorzugsweise in äquidistanten Zeitabschnitten. Das jeweils anliegende Ausgangssignal der Integrierstufe 20 wird dabei einem Rechenwerk 21 zugeführt, das vorteilhaft aus einem Mikroprozessor mit einer daran angeschlossenen Anzeige 22 besteht. Ein mit dem Rechenwerk 21 verbundener, vorzugsweise integrierter Taktgeber 23 initiiert mit jedem Taktsignal die periodische Abfrage der Integrierstufe 20, wobei die abgefragten Einzelwerte in dem Rechenwerk 21 aufsummiert werden. Nach jeder Abfrage wird die Integrierstufe 20 auf Null zurückgesetzt.

Das Rechenwerk 21 ist über eine Steuerleitung 25 mit einem Stellorgan 11 verbunden, welches den Schalter S1 betätigt. Liegt ein Steuersignal auf der Steuerleitung 25 an, wird das Stellorgan den Schalter S1 öffnen und den Antriebsmotor 9 vom Mehrphasennetz trennen. Nun wird von der Bedienungsperson auch der Hauptschalter S geöffnet. Nach Ablauf einer vorbestimmten Zeitdauer - die vom Taktgeber 23 steuerbar ist - wird der Schalter S1 wieder geschlossen. Die Vorrichtung ist zum Start eines neuen Conchierprozesses bereit.

Es kann auch zweckmässig sein, den Hauptschalter S in seiner Öffnungsstellung durch eine Feder vorzuspannen. In seiner geschlossenen Stellung wird der Hauptschalter S durch einen Rastnocken od.dgl. gehalten, der von einem Elektromagneten verschwenkbar ist. Der Elektromagnet ist an die Steuerleitung 25 angeschlossen und verschwenkt bei anliegendem Steuersignal den Rastnocken in eine Ausserbetriebsstellung, sodass der Hauptschalter S unter der Wirkung der Feder in die Öffnungsstellung zurückspringt. Der Antriebsmotor wird so vom Netz getrennt.

Auch könnten der Hauptschalter S und der Schalter S1 durch einen elektromagnetischen Haltekreis miteinander in Wirkverbindung stehen. Nach einem kurzzeitigen Schliessen des Hauptschalters S würde dann der Schalter S1 über ein von einem Steuersignal auf der Steuerleitung 25 entregbares Selbsthalterelais geschlossen.

Das Rechenwerk 21 ist ferner mit einer Tastatur 24 zur Eingabe von Daten verbunden. Auch ist eine Anzeige 22 vorgesehen, die im dargestellten Ausführungsbeispiel aus einer Siebensegmentanzeige gebildet ist. Vorzugsweise ist als Anzeige 22 ein Bildschirm vorgesehen.

Zu Beginn eines Conchierprozesses wird über die Tastatur 24 dem Rechenwerk 21 die Rezeptur der zu behandelnden Schokolademasse eingegeben. Das Rechenwerk 21 ermittelt anhand der eingegebenen Daten und einem im Rechenwerk 21 vorgesehenen Datenspeicher die für den Conchierprozess notwendige Zeit bzw. einzubringende Energiemenge. Nach Starten des Conchierprozesses durch Einschalten des Hauptschalters S läuft der Antriebsmotor 9 an. Die auftretenden Motorbetriebsparameter werden über den Stromabgriff der Wirkungen c und über den Spannungsabgriff T erfasst und über den Signalwandler 5' der Integrierstufe 20 zugeführt. Die auftretenden Energiesummenwerte werden vom Rechenwerk 21 aufaddiert, bis der aus dem Speicher ausgelesene Energiesummenwert erreicht ist. Nun wird ein Schluss-Signal erzeugt, das ein Steuersignal auf der Steuerleitung 25 initiiert und den Schalter S1 zur Beendigung des Conchierprozesses öffnet.

Vorteilhaft ist vorgesehen, nach Erzeugung des Schluss-Signales die dann anschliessende Flüssigphase des Conchierprozesses nach einer vorgebbaren Zeit zu steuern. Diese vorgebbare Zeitdauer wird ebenfalls anhand der eingegebenen Daten aus dem Speicher des Rechenwerks ausgelesen. Nach Auftreten des Schluss-Signal wird dann über den Taktgeber 23 eine entsprechende Zeitdauer abgemessen, bevor ein Steuersignal auf der Leitung 25 initiiert wird.

Neben einer Zeitsteuerung der Flüssigphase und gegebenenfalls auch der Trockenphase können diese Phasen auch nach einem vorgebbaren Energiesummenwert gesteuert werden. Welche der Betriebsarten zur Durchführung des Conchierprozesses gewählt wird, kann über die Tastatur 24 eingegeben werden.

Bevorzugt wird der Energiesummenwert des Energieeintrags während der zäh-plastischen Phase für die Bestimmung der Zeitdauer des Conchierprozesses ausgewertet. Dieser Verfahrensweise liegt die Erkenntnis zugrunde, dass die Qualität und die Eigenschaften der Schokolade im wesentlichen von dem Energieeintrag während der zäh-plastischen Phase der Schokolademasse abhängig sind.

Zur Erzielung einer höheren Genauigkeit bei der Bildung des Energiesummenwertes kann es vorteilhaft sein, die Temperatur des Wärmeträgermediums der Temperiereinrichtung der Conche 1 bei der Bildung des Energiesummenbildung zu berücksichtigen. Die Temperatureinrichtung der Conche 1 wird - in bekannter Weise - zunächst zur Erwärmung der Schokolademasse und später zu deren Kühlung eingesetzt. Hierzu ist die Conche 1 mit einem Doppelmantel versehen, in dem das Wärmeträgermedium, insbesondere Wasser, fliesst. Im Doppelmantel ist ein Temperatursensor 26 angeordnet, der so vom Wärmeträgermedium umspült ist und daher mittelbar (d.h. über das Wärmeträgermedium) ein der Temperatur der Schokolademasse entsprechendes Signal abgibt. Das Ausgangssignal des Temperatursensors 26 ist einem Signalwandler 27 zugeführt, der über die Datenleitung 28 mit dem Rechenwerk 21 verbunden ist.

In bevorzugter Weiterbildung der erfindungsgemässen Vorrichtung ist der Signalwandler 27 über eine Datenleitung 29 mit einem Drucker 30 verbunden, um den aktuellen Temperaturwert schriftlich auszugeben. Bevorzugt ist das Rechenwerk 21 über eine Datenausgangsleitung 31 mit dem Drucker 30 verbunden. Zweckmässig erfolgt dies über den Signalwandler 27, der eine entsprechende Ansteuerschaltung für den Drucker 30 enthalten kann.

Über den Drucker 30 können sowohl die über die Tastatur 24 eingegebenen Rezepturdaten als auch die zu diesen Rezepturdaten aus dem Speicher des Rechenwerkes 21 ausgelesenen Steuergrössen ausgedruckt werden. Vorteilhaft wird auch der zeitliche Verlauf der eingebrachten Energiesumme und zweckmässig auch der Temperaturverlauf ausgegeben, sodass eine schriftliche Dokumentation gegeben ist, die eine Reproduzierbarkeit bei gleicher Eigenschaft und Qualität der Schokolade sicherstellt.

In bevorzugter Weiterbildung der Vorrichtung wird die Conche 1 gleichzeitig zum Zumischen von der Rezeptur entsprechenden Mischungskomponenten in die Schokolademasse verwendet. Im gezeigten Ausführungsbeispiel erfolgt die Zugabe der Mischungskomponenten über Förderbänder 34 und 35, wobei jedes Förderband 34 und 35 über einen getrennten Antriebsmotor 36 bzw. 37 angetrieben ist und die Förderbänder Teil eines Austragssystems eines (nicht dargestellten) Behälters, beispielsweise für Kakaobutter, Milchpulver bzw. Lezithin oder anderen Additiven, sind. Es versteht sich, dass diese Förderbänder nur ein Beispiel für ein Austragsystem sind und durch jedes andere an sich bekannte, äquivalente Mittel zur dosierten Zugabe der Additive ersetzbar sind. Jeder Antriebsmotor ist über eine getrennte Steuerleitung 32 und 33 mit dem Rechenwerk 21 verbunden. Zwischen den Antriebsmotoren 36 und 37 und dem Rechenwerk 21 sind gegebenenfalls notwendige Ansteuerstufen bekannter Art angeordnet, um die Motoren ein- oder abzuschalten.

Da dem Rechenwerk 21 die Rezeptur der zu behandelnden Schokoladenmasse eingegeben ist, kann die Zugabe der Mischungskomponenten ohne weiteres vom Rechenwerk gesteuert werden. Hierbei ist von Vorteil, dass die Zugabe reproduzierbar nach Eintrag einer bestimmten Energiemenge erfolgen kann. Dies ist insbesondere deshalb vorteilhaft, da nach Eintrag einer bestimmten Energiemenge eine bestimmte Viskosität der Schokolademasse gegeben ist, die dann eine gute Verteilung der Mischungskomponenten und Einbindung in die Schokolademasse gewährleistet. So kann nach Erreichen eines ersten Energiesummenwertes über die Steuerleitung 32 der Motor 36 zum Einbringen einer ersten Mischungskomponente in Betrieb genommen werden. Nach Erreichen eines zweiten Energiesummenwertes wird dann über die Steuerleitung 33 der Motor 37 für eine Zugabe einer zweiten Mischungskomponente in Betrieb genommen.

Anstelle der im Ausführungsbeispiel dargestellten Zuführeinrichtungen 10 und 10' kann auch eine einzelne Zuführeinrichtung vorgesehen werden, mit der nacheinander mehrere Mischungskomponenten zugegeben werden. Zweckmässig ist auch die Anordnung von Mischungskomponenten enthaltenden Silos über der Conche, wobei die Siloöffnungen über die Antriebsmotoren 36 und 37 und entsprechende Steuereinrichtungen geöffnet werden können.

Bevorzugt erfolgt die Zugabe der Mischungskomponenten über die Zuführeinrichtungen 10 und 10' in Abhängigkeit von der momentanen Energieaufnahme des Antriebsmotors 9. Hierzu ist der Ausgang des Signalwandlers 5 mit dem Rechenwerk 21 verbunden, welches den vom Messwandler 5 kommenden Istwert mit einem Sollwert vergleicht und bei Erreichen des Sollwertes die entsprechende Zuführeinrichtung 10 bzw. 10' ansteuert. Die Art der Zugabe der Mischungskomponenten ist unabhängig von der Steuerung des Conchierprozesses nach einem Energiesummenwert. Da die momentane Energieaufnahme des Antriebmotors 9 ein mittelbares Mass für die Flüssigkeit der Schokolademasse ist, erfolgt die Zugabe der Schokoladekomponenten in Abhängigkeit von der über den Stromabgriff c gemessenen Stromaufnahme des Antriebsmotors 9.

Hervorzuheben ist, dass über den Stromabgriff mittels Wicklungen c mehrere Funktionen während eines Conchierprozesses gesteuert werden können. Im gezeigten Ausführungsbeispiel erfolgt über den Stromabgriff die stromabhängige Steuerung des Antriebsmotors 9, die Steuerung der Länge des Conchierprozesses über das Rechenwerk 21 sowie die Zugabe von Mischungskomponenten nach den momentanen Energiewerten des Antriebmotors 9.

## Patentansprüche

1. Verfahren zum Betrieb einer Conche zum Verreiben und Verspachteln von Schokoladenmassen mit einem Trog, in dem wenigstens ein von einem elektrischen Motor (9) angetriebener Rotor umläuft, der über seinen Umfang verteilt und mit axialem Abstand zueinander angeordnete Versalbungswerkzeuge trägt, wobei der Antriebsmotor (9) von einer Motorsteuerschaltung (8) gesteuert wird und zur Erfassung der der Conche (1) zugeführten Energie zumindest ein Motorbetriebsparameter erfasst und ausgewertet wird, wobei die Schokolademasse während des Conchierprozesses von einer trocken-pastösen Phase über eine zäh-plastische Phase in eine flüssige Phase übergeht, dadurch gekennzeichnet, dass mindestens die während der zäh-plastischen Phase der Schokolademasse der Conche zugeführte Energiesumme erfasst und in Abhängigkeit des erhaltenen Energiesummenwertes ein Signal zur Beendigung wenigstens eines Abschnittes des Conchierprozesses und für die Zugabe von Schokoladekomponenten abgeleitet wird.

2. Verfahren nach Anspruch 1, dadurch gekennzeichnet, dass nach Auftreten des Schluss-Signales der Conchierprozess nach einer vorgebbaren Zeitdauer beendet wird.

3. Verfahren nach Anspruch 1, dadurch gekennzeichnet, dass nach Auftreten des Schluss-Signals der Conchierprozess nach Eintrag einer vorgebbaren Energiesumme beendet wird.

4. Verfahren nach einem der Ansprüche 1 bis 3, dadurch gekennzeichnet, dass zur Bildung des Energiesummenwertes auch die während der trocken-pastösen Phase, vorzugsweise zusätzlich die während der Flüssigphase der Conche zugeführte Energie aufsummiert wird.

5. Verfahren nach einem der Ansprüche 1 bis 4, dadurch gekennzeichnet, dass die der Conche (1) über ein Wärmeträgermedium zugeführte Wärmeenergie zur Bildung des Energiesummenwertes herangezogen wird.

6. Verfahren nach einem der Ansprüche 1 bis 5, dadurch gekennzeichnet, dass die Zugabe von Mischungskomponenten zur Schokolademasse in Abhängigkeit der Grösse des ermittelten Energiesummenwertes, vorzugsweise in Abhängigkeit der Grösse momentan auftretender Energiewerte, gesteuert wird.

7. Vorrichtung zur Durchführung des Verfahrens nach einem der Ansprüche 1 bis 6, mit einem elektrischen Antriebsmotor (9) zum Antreiben eines Rotors einer Conche und einer damit verbundenen Motorsteuerschaltung (8) und einer Messeinrichtung zur Erfassung mindestens eines Motorbetriebsparameters, zum Erfassen der der Conche zugeführten Energie, wobei die Messeinrichtung, insbesonders über einen Signalwandler (5'), mit einer Integrierstufe (20) verbunden ist, dadurch gekennzeichnet, dass die Integrierstufe (20) zum Integrieren der aufgenommenen Energie über der Zeit ausgebildet ist und dass das Ausgangssignal der Integrierstufe (20) mit einem Rechenwerk (21) zum Aufaddieren der Energiesummenwerte der Integrierstufe verbunden ist, welches über eine Steuerleitung (25) den Antriebsmotor (9) in Abhängigkeit des erhaltenen Energiesummenwertes schaltet.

8. Vorrichtung nach Anspruch 7, dadurch gekennzeichnet, dass das Rechenwerk (21) mit einem, vorzugsweise von dem Wärmeträgermedium der Conche (1) umspülten, Temperatursensor (26) verbunden ist.

9. Vorrichtung nach Anspruch 7 oder 8, dadurch gekennzeichnet, dass das Rechenwerk (21) über eine Steuerleitung (32, 33) mit einer Zuführeinrichtung (10, 10') für Mischungskomponenten der Schokolademasse zur Steuerung derselben verbunden ist.

10. Vorrichtung nach Anspruch 9, dadurch gekennzeichnet, dass, die Zuführeinrichtung (10, 10') Teil eines Austrag- bzw. Dosiersystems (34, 35) für Additive, wie Kakaobutter, Milchpulver, Lezithin od.dgl., mit mindestens einer Antriebseinrichtung (36 bzw. 37) ist.

## Claims

1. A method of operating a conche for the trituration and smoothing of chocolate masses, with a vat in which at least one rotor rotates, which is driven by an electric motor (9) and which carries spreading tools distributed over its periphery and disposed with an axial separation from each other, wherein the drive motor (9) is controlled by a motor control circuit (8) and at least one motor operating parameter is detected and evaluated for determining the energy supplied to the conche (1), wherein the chocolate mass changes during the conching process from a dry paste phase via a semi-liquid paste phase into a liquid phase, characterised in that at least the total energy supplied to the conche during the semi-liquid paste phase is determined, and depending on the value of the total energy obtained a signal is derived for the termination of at least one section of the conching process and for the addition of chocolate components.

2. A method according to claim 1, characterised in that after the appearance of the termination signal the conching process is ended after a predeterminable period of time.

3. A method according to claim 1, characterised in that after the appearance of the termination signal the conching process is ended after the input of a predeterminable total energy.

4. A method according to any one of claims 1 to 3, characterised in that the energy supplied to the conche during the dry paste phase, and preferably in addition the energy supplied to the conche during the liquid phase, is also added up for the formation of the value of the total energy.

5. A method according to any one of claims 1 to 4, characterised in that the heat energy supplied to the conche (1) via a heat transfer medium is taken into account for the formation of the value of the total energy.

6. A method according to any one of claims 1 to 5, characterised in that the addition of mixture components to the chocolate mass is controlled depending on the magnitude of the value of the total energy determined, and preferably depending on the magnitude of energy values occurring instantaneously.

7. A device for carrying out the method according to any one of claims 1 to 6, with an electric drive motor (9) for driving a rotor of a conche and a motor control circuit (8) connected thereto, and a measuring device for recording at least one motor operating parameter for determining the energy supplied to the conche, wherein the measuring device is connected to an integrating stage (20), particularly via a signal converter (5'), characterised in that the integrating stage (20) is designed for integrating the recorded energy overtime, and that the output signal from the integrating stage (20) is connected to an arithmetic unit (21) for adding up the total energy values from the integrating stage, which arithmetic unit switches the drive motor (9) via a control line (25) depending on the value of the total energy obtained.

8. A device according to claim 7, characterised in that the arithmetic unit (21) is connected to a temperature sensor (26) around which the heat transfer medium of the conche (1) preferably flows.

9. A device according to claim 7 or 8, characterised in that the arithmetic unit (21) is connected via a control line (32, 33) to a feeder device (10, 10') for mixture components of the chocolate mass for controlling the same.

10. A device according to claim 9, characterised in that the feeder device (10, 10') is part of a delivery or metering system (34, 35) for additives such as cocoa butter, powdered milk, lecithin or the like, with at least one drive device (36 or 37).

## Revendications

1. Procédé pour faire fonctionner une conche, destinée à broyer et lacérer des masses de chocolat, avec une auge, dans laquelle tourne au moins un rotor, entraîné par un moteur électrique (9), qui porte des outils d'écrasement disposés sur sa périphérie et à distance axiale les uns par rapport aux autres, le moteur d'entraînement (9) étant commandé par un circuit de commande de moteur (8), et au moins un paramètre de fonctionnement du moteur étant mesuré et exploité pour agir sur l'énergie amenée à la conche (1), la masse de chocolat passant, pendant le processus de raffinage, d'une phase sèche-pâteuse, en une phase liquide, en passant par une phase intermédiaire visqueuse-plastique, caractérisé en ce qu'au moins la somme d'énergie amenée à la conche pendant la phase visqueuse-plastique de la masse de chocolat est mesurée et, en fonction de la valeur de la somme d'énergie obtenue, un signal est dérivé pour faire cesser au moins une partie du processus de raffinage et l'apport de composants de chocolat.

2. Procédé selon la revendication 1, caractérisé en ce qu'après apparition du signal de fin, le processus de raffinage est achevé à l'issu d'une durée pouvant être prédéterminée.

3. Procédé selon la revendication 1, caractérisé en ce qu'après apparition du signal de fin, le processus de raffinage est terminé une fois atteinte une somme d'énergie pouvant être prédéterminée.

4. Procédé selon l'une des revendications 1 à 3, caractérisé en ce que pour former la valeur de la somme d'énergie, on totalise l'énergie amenée à la conche, également pendant la phase sèche-pâteuse, de préférence en plus l'énergie amenée pendant la phase liquide.

5. Procédé selon l'une des revendications 1 à 4, caractérisé en ce que l'énergie calorifique amenée à la conche (1) par l'intermédiaire d'un fluide-caloporteur est exploitée pour former la valeur de la somme d'énergie.

6. Procédé selon l'une des revendications 1 à 5, caractérisé en ce que l'apport des composants de mélange à la masse de chocolat est commandé en fonction de la valeur de la somme d'énergie calculée, de préférence en fonction de la valeur d'énergie instantanée.

7. Procédé de mise en oeuvre du procédé selon l'une des revendications 1 à 6, avec un moteur d'entraînement électrique (9), destiné à entraîner un rotor d'une conche et un circuit de commande de moteur (8) lui étant relié et un dispositif de mesure, destiné à mesurer au moins un paramètre de fonctionnement de moteur, pour mesurer l'énergie amenée à la conche, le dispositif de mesure étant relié à un étage intégrateur (20), en particulier par l'intermédiaire d'un convertisseur de signaux (5'), caractérisé en ce que l'étage intégrateur (20) est réalisé pour effectuer l'intégration de l'énergie apportée en fonction du temps, en ce que le signal de sortie de l'étage intégrateur (20) est relié à un calculateur (21), pour opérer la sommation des valeurs de somme d'énergie de l'étage intégrateur et commandant le moteur d'entraînement (9) par l'intermédiaire d'un conducteur de commande (25), en fonction de la valeur obtenue de la somme de l'énergie.

8. Dispositif selon la revendication 7, caractérisé en ce que le calculateur (21) est relié à un capteur de température (26), balayé de préférence par le fluide caloporteur de la conche (1).

9. Dispositif selon la revendication 7 ou 8, caractérisé en ce que le calculateur (21) est relié, par l'intermédiaire d'un conducteur de commande (32, 33) à un dispositif d'amenée (10, 10') pour les composants du mélange de la masse de chocolat, en vue de commander celle-ci.

10. Dispositif selon la revendication 9, caractérisé en ce que le dispositif d'amenée (10, 10') fait partie d'un système d'extraction respectivement de dosage (34, 35) pour des additifs, tels que du beurre de cacao, de la poudre de lait, de la lécithine ou analogue, avec au moins un dispositif d'entraînement (36 respectivement 37).
